# EUROPEAN PATENT SPECIFICATION

(11) **EP 3 162 199 B1**
(45) Date of publication and mention of the grant of the patent: **11.11.2020**
(21) Application number: 16190757.1
(22) Date of filing: 27.09.2016
(51) Int. Cl.: F16H 63/30, A01K 5/00, B01F 13/00, F16H 3/093, B01F 7/08

(54) **TRANSMISSION GROUP FOR AN AGRICULTURAL MIXER**
GETRIEBEGRUPPE FÜR EINEN LANDWIRTSCHAFTLICHEN MISCHER
GROUPE DE TRANSMISSION POUR UN MÉLANGEUR AGRICOLE

(30) Priority: 30.09.2015 IT UB20154054
(43) Date of publication of application: 03.05.2017
(73) Proprietor: OMSI Trasmissioni S.p.A., 25077 Roè Volciano, Brescia (IT)
(72) Inventor: SONCINA, Renato, I-25077 Roè Volciano Brescia (IT)
(74) Representative: Gamba, Alessandro

(56) References cited:
- EP-A2- 0 809 035
- DE-U1- 20 316 997
- GB-A- 921 869
- US-A1- 2006 256 647

## Description

The present invention relates to a transmission group for an agricultural mixer, a self-propelled agricultural mixer and an agricultural mixer trailer comprising said transmission group.

In the present description "agricultural mixer" means a machine suitable to perform production operations of feed for farm animals, preferably cattle. In the prior art, solutions of "self-propelled agricultural mixers" driveable by the operator being provided with specific means of movement comprising for example an engine group are known of; in addition, solutions of "agricultural mixer trailers", i.e. not provided with suitable means of movement, but suitable for towing by suitable drive means, such as an agricultural tractor are also known.

The purpose of "agricultural mixers" is to mix hay and other foods inside suitable tanks so as to produce the feed, also known as "mixture." Preferably, the mixing takes place by means of at least one auger which by rotating mixes and in some cases minces the material inside the tank; depending on the rotation speed of the auger the degree of mixing and mincing of the feed, as well as the efficiency of emptying the same from the tank, varies.

In the known solutions the auger is driven in rotation by the movement system of the agricultural mixer in the case of a self-propelled mixer, or of the agricultural tractor which tows it in the case of a mixer trailer, thanks to the presence of a specific transmission group operatively connected in input to said movement system and in output to said auger (for example, by means of a kinematic mechanism comprising suitable transmissions).

The transmission method of the rotary motion to the auger and the control of its speed of rotation are an aspect of fundamental importance in agricultural mixers. Specifically, it is in fact essential that the auger is rotatable at a higher speed (used for the crushing of the mixture and for emptying the mixture from the tank), and at a lower (mixing) speed and that it is possible to switch between the two speeds as needed. It is also important that the rotation of the auger can be stopped when no longer needed (for example, while moving the machine from one point to another of the farm).

In the state of the art hydrostatic and mechanical type transmission groups are known of suitable to meet the above needs.

Hydrostatic transmission groups are suitable to transmit rotary motion and are also suitable to manage variations of the speed of rotation of the auger; such groups are also suitable to uncouple the movement of the auger from the movement system of the agricultural mixer, i.e. to start the rotation of the auger, or to stop it, when necessary.

However, such groups are less efficient and, consequently entail higher fuel consumption. In addition, the presence of significant quantities of hydraulic oil, needed for the operation of such transmissions, is perceived negatively by farmers since hydraulic oil is a pollutant and, in case of leakage, could mix with the feed and contaminate it.

Transmission groups of the mechanical type have a mechanical gearbox with two or more speeds; they are more efficient than the hydrostatic transmission groups and are suitable to permit different speeds of rotation of the auger to be achieved, and possibly to stop its rotation, but have the disadvantage of requiring stopping of the agricultural mixer when switching from one speed to another.

US 2006/256647 A discloses an agricultural mixer comprising a two-speed transmission with an additional bypass shaft for a starting stage.

DE 203 16 997 U describes an agricultural mixer with alternative transmissions, one embodiment for shifting between forward and reverse and other embodiments with two forward speeds and coaxial input and output.

The purpose of the present invention is to provide a transmission group for an agricultural mixer suitable to effectively transmit the rotary motion from the movement system to the auger, resolving the above mentioned drawbacks of the known solutions.

Such purpose is achieved by an agricultural mixer according to claim 1. The dependent claims describe further preferred embodiments.

The characteristics and advantages of the agricultural mixer according to the present invention will be evident from the description given below, by way of a non-limiting example, according to the appended drawings, wherein:

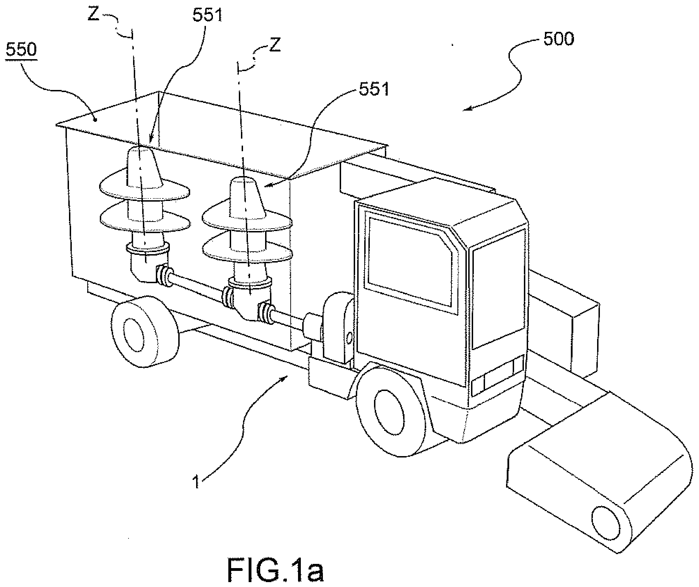

- Figure 1a illustrates a perspective view of a self-propelled agricultural mixer with some components in transparency, in which two augers inside a mixing tank and a transmission group are visible;

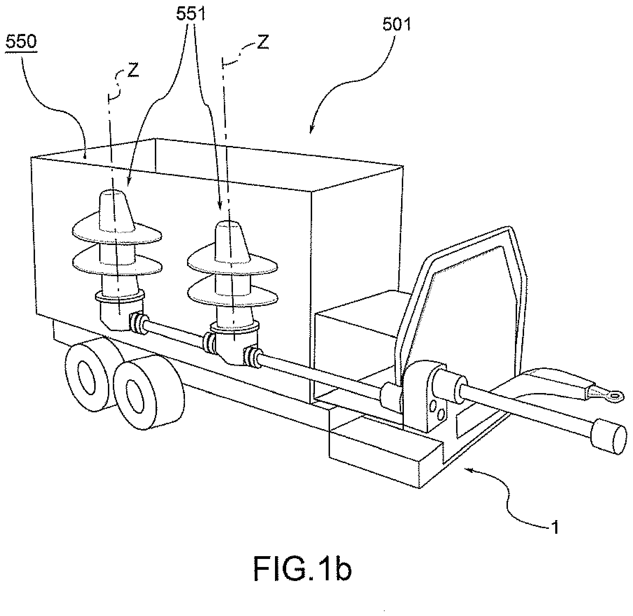

- Figure 1b represents a perspective view of an agricultural mixer trailer with some components in transparency, in which two augers inside a mixing tank and a transmission group are visible;

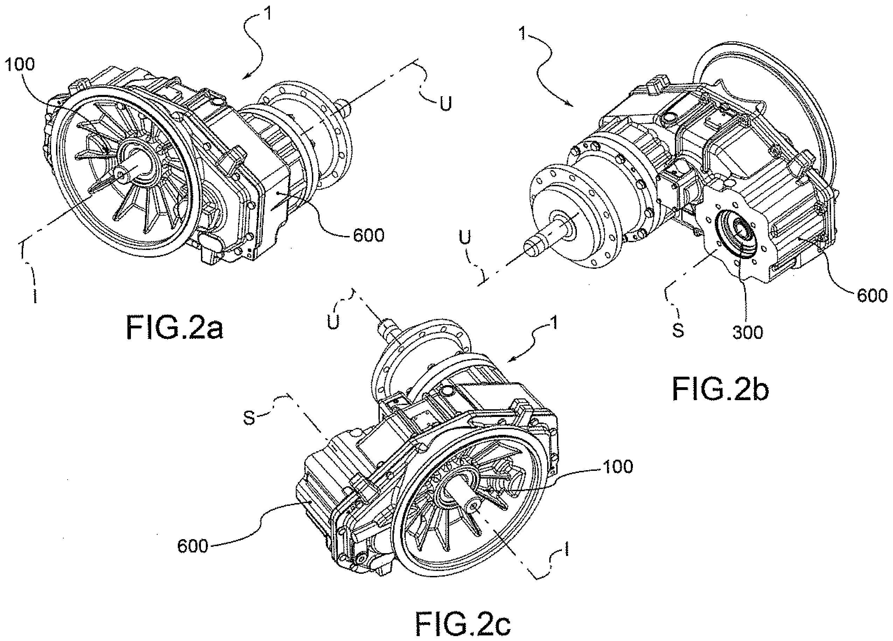

- Figures 2a, 2b and 2c show three schematic perspective views, respectively, of a transmission group according to a preferred embodiment;

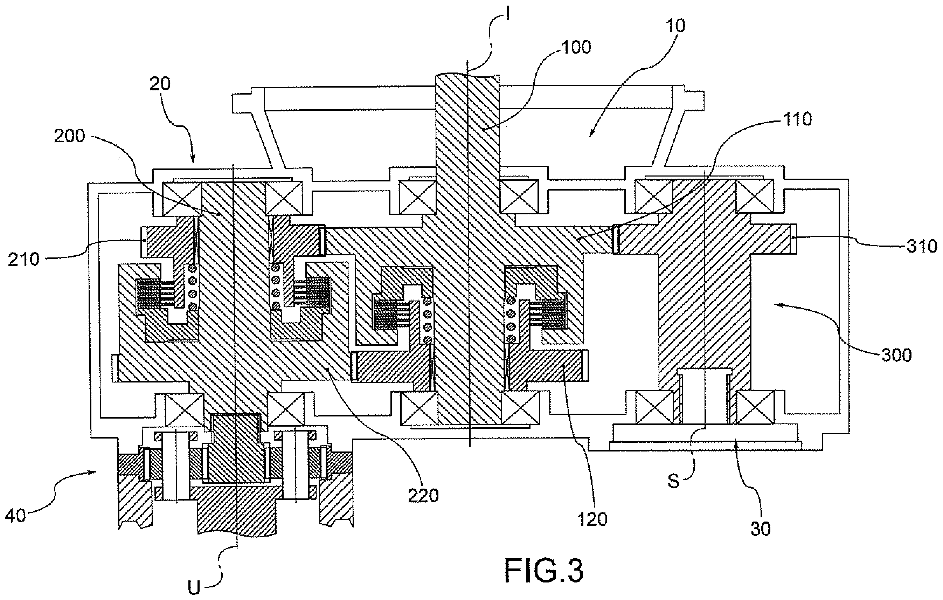

- figure 3 represents a schematic cross-section view of a transmission group of the present invention, according to a preferred embodiment;

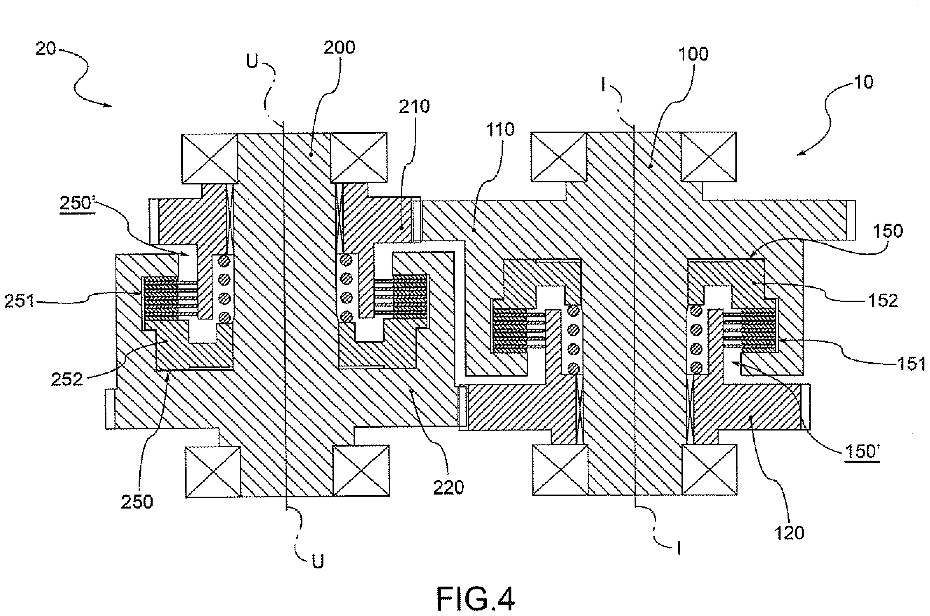

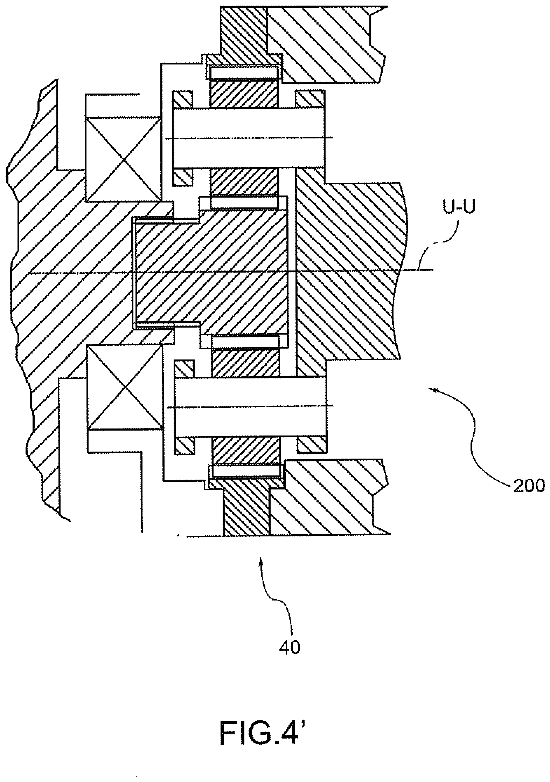

- Figures 4 and 4' illustrate two simplified schematic views in cross-section of some portions of the transmission group shown in Figure 3;

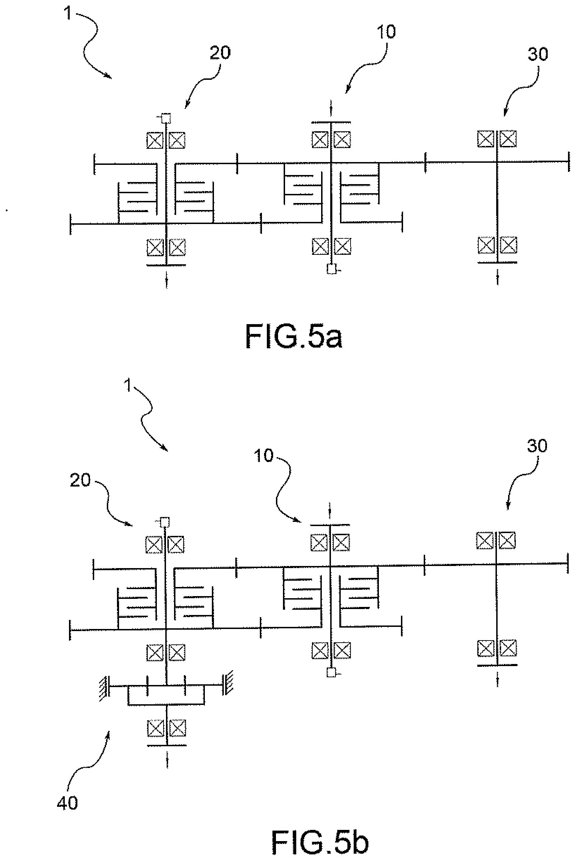

- Figures 5a and 5b show schematically a transmission group for a self-propelled agricultural mixer with a central connection to the engine, respectively without and with an epicycloidal gear reducer device integrated in output;

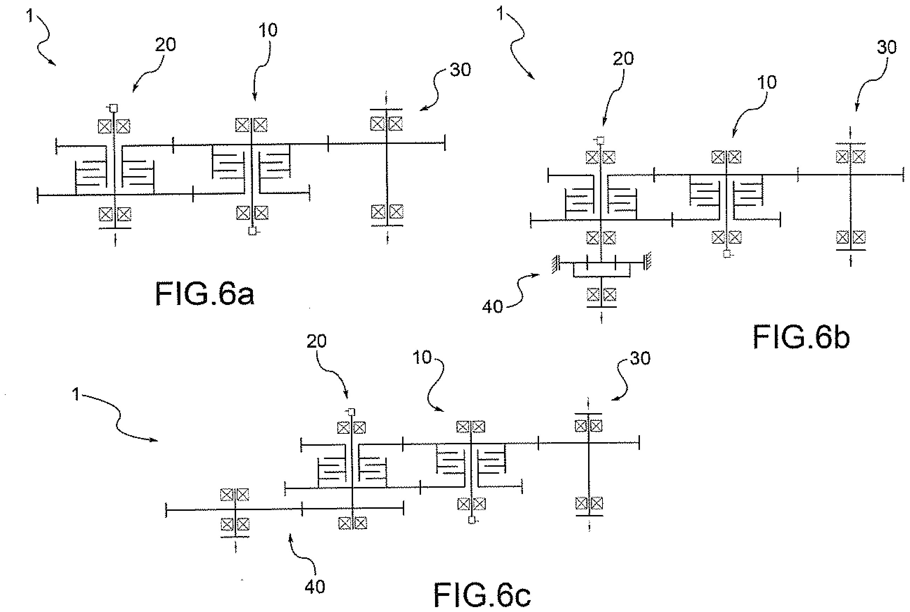

- Figures 6a, 6b and 6c schematically represent a transmission group for a self-propelled agricultural mixer with a lateral connection to the engine, respectively without an epicycloidal gear reducer device integrated in output and with an integrated gear reducer in output;

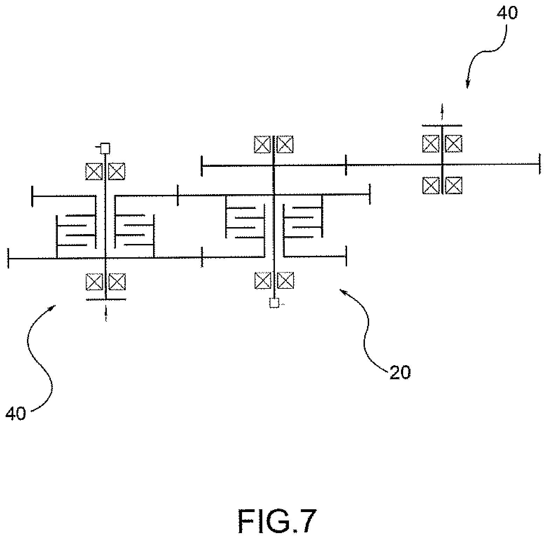

- Figure 7 schematically illustrates a transmission group for an agricultural mixer trailer;

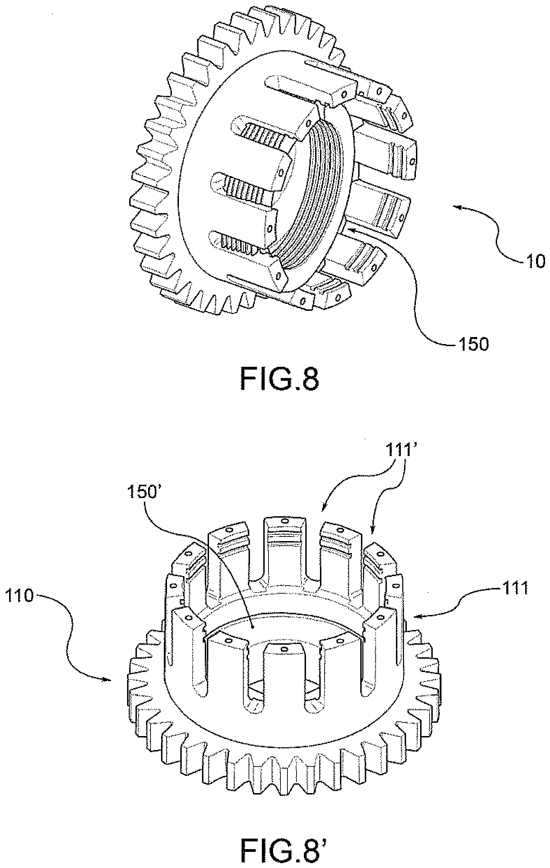

- Figures 8 and 8' show two perspective views of a preferred embodiment of a first gear input, comprised in the transmission group according to a preferred embodiment, respectively with and without gear clutch disks inside it.

With reference to the appended drawings, reference numeral 1 globally denotes a transmission group in its entirety, according to a preferred embodiment.

Preferably, the transmission group 1 is part of an agricultural mixer suitable to perform production operations of feed for farm animals, preferably cattle; in particular, in the appended tables a self-propelled agricultural mixer is indicated by reference numeral 500 and an agricultural mixer trailer by reference numeral 501.

In both of the above embodiments the agricultural mixer comprises a mixing tank 550 suitable to receive hay and other foods and at least one auger 551 housed inside the mixing tank 550. Preferably, the agricultural mixer comprises one, two or three augers 551 inside the mixing tank 550. Preferably, each auger 551 extends in height from the bottom of the mixing tank 550 along an extension axis Z-Z around which it is guided in rotation. Preferably, according to the number of augers 551 comprised, the agricultural mixer is equipped with a dedicated mechanism which permits the movement thereof in series.

The self-propelled agricultural mixer 550 comprises a dedicated movement system for its movement on a ground plane, for example comprising an engine group, preferably an internal combustion engine with diesel power or an electric motor; moreover, the movement system of a self-propelled agricultural mixer 550 comprises a PTO for one or more hydraulic pumps for the translation circuit, one or more hydraulic motors connected to one or more axles and/or to at least two wheel hub motors.

The agricultural mixer trailer 551 is instead towable by a motor vehicle, preferably an agricultural tractor, the latter comprising a dedicated movement system for its movement on a ground plane, for example comprising an engine group, preferably a diesel engine and possibly a power takeoff.

According to a preferred embodiment, the transmission group 1 of the present invention is therefore suitable to be operatively connected to the movement system of said agricultural mixer or of the motor vehicle and is operatively connected with at least one auger 551 to guide it in rotation. In other words, the transmission group 1 is suitable to connect the movement system and the at least one auger 551 so as to transmit from the first to the second rotational action.

According to a preferred embodiment, the transmission group 1 comprises an input device 10 and an output device 20 operatively connected to one another.

In particular, the input device 10 is suitable to receive the rotary motion from the movement system, for example from an engine group of the agricultural mixer or motor vehicle, while the output device 20 is suitable to transmit the rotary motion of the input device 10 to the auger 551.

According to a preferred embodiment, the input device 10 comprises an input shaft 100 which extends along an input axis I-I around which it is movable in rotation. Preferably, the input device 10 further comprises a pair of gears, in particular, a first input gear 110 operatively connected to the input shaft 100 and a second input gear 120 operable in connection with the input shaft 100 by means of a clutch input group 150.

Similarly, according to a preferred embodiment, the output device 20 comprises an output shaft 200 which extends along an output axis U-U around which it is movable in rotation. Preferably, the output device 20 comprises a pair of gears, in particular, a first output gear 210 operatively connected, meshed to the first input gear 110 and controllable in connection to the output shaft 200 by means of a clutch output group 250 and a second output gear 220 operatively connected to the output shaft 200 and to the second input gear 120.

According to a preferred embodiment, the input shaft 100 and the output shaft 200 are operatively connected to each other by means of the first gears 110, 210 upon action of the second clutch group 250 or by the second gears 120, 220 on action of the first clutch group 150.

In other words, depending on which of the two clutch groups is alternately operated, the transmission of rotation between the input shaft 100 and the output shaft 200 is performed via the first gears 110, 210 or via the second gears 120, 220. Preferably, depending on the diameter of the gears and/or the number of teeth thereof different rotational speeds of the output shaft 200 are achieved.

In a preferred embodiment, for example the meshing of the first gears 110, 210 corresponds to a rotation speed of the output shaft 200 greater than the rotation speed of the output shaft 200 corresponding to the meshing of the second gears 120, 220. In other words, the actuation of the clutch input group 150 corresponds to a lower rotation speed of the output shaft 200 than the rotation speed of the output shaft 200 corresponding to the actuation of the clutch output group 250.

Preferably, the actuation of the clutch input group 150 corresponds to a slower rotation of the output shaft 200, and thus of the at least one auger 551. While actuation of the clutch output group 250 corresponds to a faster rotation of the output shaft 200, and thus of the at least one auger 551. The transmission group 1 is therefore suitable to be placed in two distinct configurations depending on whether the first clutch device 150 or the second clutch device 250 is alternately operated.

Consequently, a cutting and emptying speed (corresponding to the highest speed) and a mixing speed (corresponding to the lowest speed) are identified on the augers. As described below, between the output shaft 200 and the auger 551 additional kinematic groups suitable to achieve the final desired speed of rotation for the auger may be provided for, in other words, the auger rotation speed is not necessarily the rotation speed of the output shaft. In further embodiments of the mixer the aforementioned additional kinematic groups are also provided in cascade to the transmission group described herein.

In addition to the above, preferably, the transmission group 1 is also suitable to be placed in a "neutral" configuration; in other words, if neither of the two clutch groups 150 and 250 is actuated, the transmission of movement between the input shaft 100 and the output shaft 200 is interrupted, no meshing of the gears and their respective shafts occurring. Preferably, in this manner, the transmission group 1 makes it possible to stop the rotation of the auger 551 without necessarily having to stop the rotation of the input shaft 100.

According to a preferred embodiment, the clutch input group 150 comprises a multi-disk input pack 151 the actuation of which with reciprocal meshing of the disks involves the operative engagement between the input shaft 100 and the second input gear 120. In fact, the multi-disk input pack 151 comprises a plurality of disks in which a plurality of disks (clutch disks) are keyed to the first gear 110, integrally connected to the input shaft 100, while the remaining disks (counter disks) are keyed on the second gear 120.

According to a preferred embodiment, the clutch input group 150 comprises a hydraulic piston input 152 the actuation of which controls the actuation of the multi-disk input pack 151 , controls thus the mutual interaction between the respective disks and therefore controls the interaction between the input shaft 100 and the second input gear 120. Preferably, the clutch input group 150 further comprises an input return spring, which exerts on the hydraulic piston input 152 an axial force which, once the control pressure of the clutch input group 150 is released pushes back the piston and opens the clutch.

In a preferred embodiment, the first input gear 110 is integrally connected to the input shaft 100, so that a rotation of the input shaft 100 corresponds to a rotation of the first input gear 110.

According to a preferred embodiment, moreover, the first input gear 110 respectively comprises an input gear bell 111 which defines around the shaft input 100 an input housing area 150' in which the clutch input group 150 is housed, and thus the multi-disk input pack 151, the hydraulic input piston 152 and the input return spring.

Preferably, the first input gear 110 is made in a single piece.

Preferably, the input gear bell 111 comprises axial slits 111' for the evacuation and circulation of oil through the clutch disks, for the lubrication of the multi-disk input pack 151. Preferably, said axial slits 111' also act as axial guides in the insertion of the respective gear disks of the first multi-disk input pack 151 in the first gear input 110.

Similarly to the description above relative to the clutch input group 150 the clutch output group 250 has the same construction logic.

Preferably, in fact, the clutch output group 250 comprises a multi-disk output pack 251 suitable to control, by means of its actuation, the operative engagement between the output shaft 200 and the first output gear 210. In fact, the multi-disk output pack 251 comprises a plurality of disks in which a plurality of disks (clutch disks) are keyed on the output gear 220, integrally connected to the output shaft 200, while the remaining disks (counter disks) are keyed on the first output gear 210.

According to a preferred embodiment, the clutch output group 250 comprises a hydraulic piston output 252 the actuation of which controls the actuation of the multi-disk output pack 251, controls thus the mutual interaction between the respective disks and therefore controls the interaction between the output gear 210 and the output shaft 200. Preferably, the clutch output group 250 further comprises an output return spring, which exerts on the hydraulic piston output 252 an axial force which, once the control pressure of the clutch output group 250 is released, pushes back the piston and opens the clutch.

In a preferred embodiment, the second output gear 220 is integrally connected to the output shaft 200, so that a rotation of the second output gear 220 corresponds to a rotation of the output shaft 200.

According to a preferred embodiment, moreover, the second output gear 220 respectively comprises an output gear bell 221 which defines around the output shaft 200 an output housing area 250' in which the clutch output group 250 is housed, and thus the multi-disk output pack 251, the hydraulic output piston 252 and the output return spring.

Preferably, the second output gear 220 is made in a single piece.

Preferably, the output gear bell 221 comprises axial slits 221' for the evacuation and circulation of oil through the clutch disks, for the lubrication of the multi-disk output pack 251. Preferably, said axial slits 221' also act as axial guides in the insertion of the respective gear disks of the multi-disk output pack 251 in the second output gear 220.

According to a preferred embodiment, the transmission group 1 further comprises a gear reducer device 40 operatively connected to the output shaft 200 at its output. The gear reducer device 40 allows, therefore, a reduction of the speed of rotation in output from the transmission group, so as to obtain the desired input speed for the augers, preferably, for the angular transmissions operatively connected to the augers.

In a preferred embodiment, the gear reducer device 40 comprises an epicycloidal gear reducer. In further embodiments, the gear reducer device 40 is of the type with parallel axis gears. In some preferred embodiments, the output of the gear reducer device 40 is on the output axis U-U, while in other embodiments the output of the gear reducer device 40 is off-set from the output axis U-U.

According to the above, i.e. maintaining all the aforesaid characteristics the transmission group 1 is configurable in such a way that it is operationally connectable to any type of movement system of the self-propelled agricultural mixer or motor vehicle. In other words, embodiments of the transmission group 1 may be provided for suitable to connect to a central engine group of the self-propelled agricultural mixer, or to a lateral engine group, or to a universal joint in output from the motor vehicle. Preferably, the transmission group 1 is then operationally connectable both directly to the engine group, but also to a PTO comprised in the self-propelled agricultural mixer or motor vehicle

According to a further embodiment, moreover, the transmission group 1 comprises a secondary device 30, which in a first configuration is suitable to be operatively connected to the movement system to transmit the rotary motion to the input device 10; in other words the secondary device 30 is a pre-input device, placed between the movement system and the input device 10.

Or in yet other configurations, the secondary device 30 is suitable to be connected to a further component of the system, such as one or more hydraulic pumps of the hydrostatic translation system of the machine and hydraulic circuits for the movement of functions; in other words the secondary device 30 works in parallel to the output device 20 allowing for example a dual output from the input device 10.

Preferably, by means of the secondary device 30 a plurality of components included in the agricultural, preferably self-propelled, mixer are operable in parallel to the augers. For example hydraulic pumps comprised in the agricultural, self-propelled mixer are operable.

According to a preferred embodiment, the secondary device 30 comprises a secondary shaft 300 extending along a secondary axis S-S and a secondary gear 310 operationally attached to the secondary shaft 300 and engaging the first input gear 110.

Preferably, in some preferred embodiments, the secondary device 30 comprises a plurality of secondary shafts and secondary gears, suitable to create a multi-axle transmission, so as to obtain a variation, an increase or decrease of the distance between the secondary axis S-S and the input axis I-I. Preferably, this configuration is extremely useful in embodiments where the secondary device 30 is used upstream of the input device 10 acting as a pre-input.

According to a preferred embodiment, the secondary axis S-S is parallel to the input axis I-I and the output axis U-U.

According to further preferred embodiments, the transmission group 1 comprises integrated within it a plurality of secondary devices 30 operatively connected in series or parallel to each other and/or to the input device 10.

Preferably, the transmission group 1 of the present invention comprises a single support structure 600 in which all the above components are respectively housed. Preferably the support structure is very limited in size due to the reciprocal integration of the various components.

In a preferred embodiment, the support structure 600 is also suitable to integrate the lubrication system of the respective components housed inside it.

Innovatively, the transmission group according to the present invention makes it possible to achieve the declared purpose of the invention, i.e. to overcome the problems and limitations typical of the solutions of the prior art ensuring high transmission efficiency, avoiding, advantageously, the need to stop the agricultural mixer when a change of the rotation speed of at least an auger is desired.

Advantageously, the transmission group has an input device and an output device connected to each other by means of two pairs of gears having two clutch groups so as to enable the choice between the two gears by using the desired clutch group. Advantageously, the configuration in which neither clutch group is actuated entails an "idle" or "neutral" configuration of the system. In other words, advantageously, the transmission group operates as a speed change unit with two possible gear ratios, allowing the initial engagement, variation of the speed of rotation and disengagement even with the mechanical parts moving, i.e. avoiding the need to stop the movement system of the agricultural mixer or motor vehicle towing it.

In addition, advantageously, the transmission group has particularly small dimensions, is compact and space-saving. Advantageously, the various components comprised in the transmission group are integrated and arranged in such a way as to minimize the external dimensions to a minimum. In particular, the input device and output device are reciprocally positioned in such a way as to allow their mutual connection to two gears, minimizing the external dimensions.

An additional advantageous aspect is that the transmission group also comprises in some embodiments, a secondary device suitable to function as a pre-input, permitting for example a lateral input side of the transmission group.

An additional advantageous aspect is that the transmission group comprises, in some preferred embodiments, a secondary device suitable to act as a second output, for example to power one or more hydraulic pumps used for the translation of the self-propelled agricultural mixer, or for powering functions of the machine, such as the hydraulic movement cylinders of the cutter comprised in the self-propelled agricultural mixer; advantageously, the solution in which the secondary device acts as a second output thus allows the powering of additional drives to that of the augers.

Yet a further advantageous aspect is that the transmission group also comprises in some embodiments a gear reducer device downstream of the output device suitable to reduce the number of revolutions in input to the respective auger.

Advantageously, the transmission group is extremely versatile and it is therefore likely to have applications in both self-propelled agricultural mixer solutions and in agricultural mixer trailer solutions. In addition the transmission group is, advantageously, directable flanged to the engine group comprised in the movement system whether the engine is in a central configuration or the engine is in a lateral configuration. Moreover, advantageously it is connectable to a power take-off of the engine.

A further advantageous aspect of the transmission group is that the possibility of controlling the variation of the rotation speed of the augers without the need to stop the agricultural mixer facilitates use of the machine by the operator.

Advantageously, the transmission group is mechanical, and thus the change in speed is obtained by a system having a greater efficiency than that which can be achieved by a hydrostatic transmission group, leading to a significant lowering of part of the fuel consumption of the agricultural mixer due to the rotation of the augers.

## Claims

1. Agricultural mixer (500, 501) comprising a transmission group (1), at least one mixing tank (550) and at least one auger (551) housed in said tank (550), wherein the transmission group (1) is operatively connected to the at least one auger (551) in such a way as to guide the rotary movement thereof, wherein the transmission group (1) comprises:
- an input device (10) suitable to receive the rotary movement from a movement system, for example from a motor group of the agricultural mixer or a motor vehicle, comprising:
i) an input shaft (100);
ii) a first input gear (110) operatively connected to the input shaft (100);
iii) a second input gear (120) controllable in connection with the input shaft (100) by means of a clutch input group (150);
- an output device (20) suitable to transmit the rotary motion of the input device (10) to the auger (551);
m) an output shaft (200);
n) a first output gear (210) meshed with the first input gear(110) and controllable in connection to the output shaft (200) by means of a clutch output group (250);
l) a second output gear (220) operatively connected to the output shaft (200) and meshed with the second input gear (120) ;
wherein the input shaft (100) and the output shaft (200) are operatively connected to each other by means of the first gears (110; 210) upon action of the second clutch group (250) or by the second gears (120; 220) on action of the first clutch group(150).

2. Agricultural mixer according to claim 1, wherein the meshing of the first gears (110; 210) corresponds to a rotation speed of the output shaft (200) greater than the rotation speed of the output shaft (200) corresponding to the meshing of the second gears (120; 220).

3. Agricultural mixer according to claim 1, wherein the clutch input group (150) and/or the clutch output group (250) respectively comprise a multi-disk input pack (151) and/or a multi-disk output pack (251) respectively suitable to command, by their actuation, the reciprocal operating engagement between the respective shafts (100; 200) with the respective gears (120; 210).

4. Agricultural mixer according to claim 3 wherein the clutch input group (150) and/or the clutch output group (250) comprises a hydraulic piston input (152) and/or a hydraulic piston output (252) the respective actuation of which commands the actuation of the multi-disk input group (151) and/or the multi-disk output group (251).

5. Agricultural mixer according to any of the preceding claims, wherein the first input gear (110) and/or second output gear (220) are integrally connected respectively to the input shaft (100) and the output shaft (200).

6. Agricultural mixer according to any of the preceding claims, wherein the first input gear (110) and/or second output gear (220) respectively comprise an input gear bell (111) and/or an output gear bell (221) which respectively define around the input shaft (100) and around the output shaft (200) an input housing area (150') and/or an output housing area (250') in which the clutch input group (150) and/or the clutch output group (250) are housed.

7. Agricultural mixer according to claim 6, wherein the first input gear (110) and/or second output gear (220) consist of a single piece.

8. Agricultural mixer according to any of the claims 6 and 7, wherein the input gear bell (111) and/or the output gear bell (221) comprise axial slits (111'; 221').

9. Agricultural mixer according to any of the preceding claims, further comprising a gear reducer device (40), preferably epicycloidal, operatively connected to the output shaft (200) at its output.

10. Agricultural mixer according to any of the preceding claims, further comprising a secondary device (30) comprising:
a) a secondary shaft (300);
b) a secondary gear (310) operatively connected to the secondary shaft (300) and engaging the first input gear (110) ;
wherein said secondary shaft (300) is suitable to be operatively connected to a further component of the system, such as one or more hydraulic pumps for moving the agricultural mixer and for moving other functions of the machine.

11. Agricultural mixer according to any of the claims 1 to 9, further comprising a secondary device (30) comprising:
a) a secondary shaft (300);
b) a secondary gear (310) operatively connected to the secondary shaft (300) and engaging the first input gear (110) ;
wherein said secondary shaft (300) is suitable to be operatively connected to the drive system to transmit the rotary motion to the input shaft (100).

12. Self-propelled agricultural mixer (500) according to any of the claims 1 to 11.

13. Agricultural mixer trailer (501) according to any of the claims from 1 to 11.

## Patentansprüche

1. Landwirtschaftlicher Mischer (500, 501), umfassend eine Getriebegruppe (1), wenigstens einen Mischbehälter (550) und wenigstens eine Schnecke (551), welche in dem Behälter (550) aufgenommen ist, wobei die Getriebegruppe (1) mit der wenigstens einen Schnecke (551) betriebsmäßig in einer derartigen Weise verbunden ist, dass sie die Drehbewegung davon führt, wobei die Getriebegruppe (1) umfasst:
- eine Eingangsvorrichtung (10), welche dazu geeignet ist, die Drehbewegung von einem Bewegungssystem, beispielsweise von einer Motorgruppe des landwirtschaftlichen Mischers oder einem Motorfahrzeug zu empfangen, umfassend:
i) eine Eingangswelle (100);
ii) ein erstes Eingangszahnrad (110), welches betriebsmäßig mit der Eingangswelle (100) verbunden ist;
iii) ein zweites Eingangszahnrad (120), welches mittels einer Kupplung-Eingangsgruppe (150) in Verbindung mit der Eingangswelle (100) steuerbar ist;
- eine Ausgangsvorrichtung (20), welche dazu geeignet ist, die Drehbewegung der Eingangsvorrichtung (10) auf die Schnecke (551) zu übertragen;
m) eine Ausgangswelle (200)
n) ein erstes Ausgangszahnrad (210), welches mit dem ersten Eingangszahnrad (110) kämmt und mittels einer Kupplung-Ausgabegruppe (250) in Verbindung mit der Ausgangswelle (200) steuerbar ist;
l) ein zweites Ausgangszahnrad (220), welches betriebsmäßig mit der Ausgangswelle (200) verbunden ist und mit dem zweiten Eingangszahnrad (120) kämmt;
wobei die Eingangswelle (100) und die Ausgangswelle (200) mittels der ersten Zahnräder (110; 210) auf eine Wirkung der zweiten Kupplung-Gruppe (250) oder durch die zweiten Zahnräder (120; 220) auf eine Wirkung der ersten Kupplung-Gruppe (150) betriebsmäßig miteinander verbunden sind.

2. Landwirtschaftlicher Mischer nach Anspruch 1, wobei das Kämmen der ersten Zahnräder (110; 210) einer Rotationsgeschwindigkeit der Ausgangswelle (200) entspricht, welche größer als die Rotationgeschwindigkeit der Ausgangswelle (200) ist, welche dem Kämmen der zweiten Zahnräder (120; 220) entspricht.

3. Landwirtschaftlicher Mischer nach Anspruch 1, wobei die Kupplung-Eingangsgruppe (150) oder die Kupplung-Ausgangsgruppe (250) jeweils einen Mehrscheiben-Eingang-Pack (151) und/oder einen Mehrscheiben-Ausgang-Pack (251) umfasst, welcher jeweils dazu geeignet sind, durch ihre Betätigung, den reziproken Betätigungseingriff zwischen den jeweiligen Wellen (100; 200) mit den jeweiligen Zahnrädern (120; 210) zu befehligen.

4. Landwirtschaftlicher Mischer nach Anspruch 3, wobei die Kupplung-Eingangsgruppe (150) und/oder die Kupplung-Ausgangsgruppe (250) einen Hydraulikkolben-Eingang (152) und/oder einen Hydraulikkolben-Ausgang (252) umfasst, dessen Betätigung die Betätigung der Mehrscheiben-Eingangsgruppe (151) und/oder der Mehrscheiben-Ausgangsgruppe (251) befehligt.

5. Landwirtschaftlicher Mischer nach einem der vorhergehenden Ansprüche, wobei das erste Eingangszahnrad (110) und/oder das zweite Ausgangszahnrad (220) integral mit der Eingangswelle (100) bzw. der Ausgangswelle (200) verbunden ist.

6. Landwirtschaftlicher Mischer nach einem der vorhergehenden Ansprüche, wobei das erste Eingangszahnrad (110) und/oder das zweite Ausgangszahnrad (220) jeweils eine Eingangszahnrad-Glocke (111) und/oder eine Ausgangszahnrad-Glocke (221) umfasst, welche entsprechend um die Eingangswelle (100) bzw. die Ausgangswelle (200) einen Eingangsgehäusebereich (150') und/oder einen Ausgangsgehäusebereich (250') definiert, in welchem die Kupplung-Eingangsgruppe (150) und/oder die Kupplung-Ausgangsgruppe (250) aufgenommen sind.

7. Landwirtschaftlicher Mischer nach Anspruch 6, wobei das erste Eingangszahnrad (110) und/oder das zweite Ausgangszahnrad (220) aus einem einzigen Stück gebildet ist.

8. Landwirtschaftlicher Mischer nach einem der Ansprüche 6 und 7, wobei die Eingangszahnrad-Glocke (111) und/oder die Ausgangszahnrad-Glocke (221) axiale Schlitze (111'; 221') umfasst.

9. Landwirtschaftlicher Mischer nach einem der vorhergehenden Ansprüche, ferner umfassend eine, vorzugsweise epizykloidische, Untersetzungsgetriebe-Vorrichtung (40), welche mit der Ausgangswelle (200) an ihrem Ausgang betriebsmäßig verbunden ist.

10. Landwirtschaftlicher Mischer nach einem der vorhergehenden Ansprüche, ferner umfassend eine Sekundärvorrichtung (30), umfassend:
a) eine Sekundärwelle (300);
b) ein Sekundärzahnrad (310), welches betriebsmäßig mit der Sekundärwelle (300) verbunden ist und mit dem ersten Eingangszahnrad (110) in Eingriff steht;
wobei die Sekundärwelle (300) dazu geeignet ist, mit einer weiteren Komponente des Systems, beispielsweise einer oder mehreren Hydraulikpumpen zum Bewegen des landwirtschaftlichen Mischers und zum Bewegen anderer Funktionen der Maschine, betriebsmäßig verbunden zu sein.

11. Landwirtschaftlicher Mischer nach einem der Ansprüche 1 bis 9, ferner umfassend eine Sekundärvorrichtung (30), umfassend:
a) eine Sekundärwelle (300);
b) ein Sekundärzahnrad (310), welches betriebsmäßig mit der Sekundärwelle (300) verbunden ist und mit dem ersten Eingangszahnrad (110) in Eingriff steht;
wobei die Sekundärwelle (300) dazu geeignet ist, mit dem Antriebssystem betriebsmäßig verbunden zu sein, um die Drehbewegung auf die Eingangswelle (100) zu übertragen.

12. Selbstfahrender landwirtschaftlicher Mischer (500) nach einem der Ansprüche 1 bis 11.

13. Landwirtschaftlicher Mischer-Anhänger (501) nach einem der Ansprüche 1 bis 11.

## Revendications

1. Mélangeur agricole (500, 501) comprenant un groupe de transmission (1), au moins une cuve de mélange (550) et au moins une tarière (551) logée dans ladite cuve (550), dans lequel le groupe de transmission (1) est fonctionnellement relié à l'au moins une tarière (551) de manière à guider le déplacement rotatif de celle-ci, dans lequel le groupe de transmission (1) comprend :
- un dispositif d'entrée (10) approprié pour recevoir le déplacement rotatif depuis un système de déplacement, par exemple depuis un groupe moteur du mélangeur agricole ou un véhicule à moteur, comprenant :
i) un arbre d'entrée (100) ;
ii) un premier engrenage d'entrée (110) fonctionnellement relié à l'arbre d'entrée (100) ;
iii) un second engrenage d'entrée (120) pouvant être commandé en liaison avec l'arbre d'entrée (100) à l'aide d'un groupe d'entrée d'embrayage (150) ;
- un dispositif de sortie (20) approprié pour transmettre le mouvement rotatif du dispositif d'entrée (10) à la tarière (551) ;
m) un arbre de sortie (200) ;
n) un premier engrenage de sortie (210) emboîté avec le premier engrenage d'entrée (110) et pouvant être commandé en liaison à l'arbre de sortie (200) à l'aide d'un groupe de sortie d'embrayage (250) ;
l) un second engrenage de sortie (220) fonctionnellement relié à l'arbre de sortie (200) et emboîté avec le second engrenage d'entrée (120) ;
dans lequel l'arbre d'entrée (100) et l'arbre de sortie (200) sont fonctionnellement reliés l'un à l'autre à l'aide des premiers engrenages (110 ; 210) lors d'une action du second groupe d'embrayage (250) ou par les seconds engrenages (120 ; 220) sur l'action du premier groupe d'embrayage (150).

2. Mélangeur agricole selon la revendication 1, dans lequel l'emboîtement des premiers engrenages (110 ; 210) correspond à une vitesse de rotation de l'arbre de sortie (200) supérieure à la vitesse de rotation de l'arbre de sortie (200) correspondant à l'emboîtement des seconds engrenages (120 ; 220).

3. Mélangeur agricole selon la revendication 1, dans lequel le groupe d'entrée d'embrayage (150) et/ou le groupe de sortie d'embrayage (250) comprennent respectivement un bloc d'entrée à disques multiples (151) et/ou un bloc de sortie à disques multiples (251) respectivement appropriés pour commander, par leur actionnement, la mise en prise fonctionnelle réciproque entre les arbres (100 ; 200) respectifs avec les engrenages (120 ; 210) respectifs.

4. Mélangeur agricole selon la revendication 3 dans lequel le groupe d'entrée d'embrayage (150) et/ou le groupe de sortie d'embrayage (250) comprennent une entrée de piston hydraulique (152) et/ou une sortie de piston hydraulique (252) dont l'actionnement respectif commande l'actionnement du groupe d'entrée à disques multiples (151) et/ou du groupe de sortie à disques multiples (251).

5. Mélangeur agricole selon l'une quelconque des revendications précédentes, dans lequel le premier engrenage d'entrée (110) et/ou le second engrenage de sortie (220) sont reliés respectivement d'un seul tenant à l'arbre d'entrée (100) et à l'arbre de sortie (200).

6. Mélangeur agricole selon l'une quelconque des revendications précédentes, dans lequel le premier engrenage d'entrée (110) et/ou le second engrenage de sortie (220) comprennent respectivement une cloche d'engrenage d'entrée (111) et/ou une cloche d'engrenage de sortie (221) qui définissent respectivement autour de l'arbre d'entrée (100) et autour de l'arbre de sortie (200) une zone de logement d'entrée (150') et/ou une zone de logement de sortie (250') dans lesquelles le groupe d'entrée d'embrayage (150) et/ou le groupe de sortie d'embrayage (250) sont logés.

7. Mélangeur agricole selon la revendication 6, dans lequel le premier engrenage d'entrée (110) et/ou le second engrenage de sortie (220) sont constitués d'une seule pièce.

8. Mélangeur agricole selon l'une quelconque des revendications 6 et 7, dans lequel la cloche d'engrenage d'entrée (111) et/ou la cloche d'engrenage de sortie (221) comprennent des fentes axiales (111' ; 221').

9. Mélangeur agricole selon l'une quelconque des revendications précédentes, comprenant en outre un dispositif démultiplicateur (40), de préférence épicycloïdal, fonctionnellement relié à l'arbre de sortie (200) au niveau de sa sortie.

10. Mélangeur agricole selon l'une quelconque des revendications précédentes, comprenant en outre un dispositif secondaire (30) comprenant :
a) un arbre secondaire (300) ;
b) un engrenage secondaire (310) fonctionnellement relié à l'arbre secondaire (300) et venant en prise avec le premier engrenage d'entrée (110) ;
dans lequel ledit arbre secondaire (300) est approprié pour être fonctionnellement relié à un autre composant du système, tel qu'une ou plusieurs pompes hydrauliques pour déplacer le mélangeur agricole et pour déplacer d'autres fonctions de la machine.

11. Mélangeur agricole selon l'une quelconque des revendications 1 à 9, comprenant en outre un dispositif secondaire (30) comprenant :
a) un arbre secondaire (300) ;
b) un engrenage secondaire (310) fonctionnellement relié à l'arbre secondaire (300) et venant en prise avec le premier engrenage d'entrée (110) ;
dans lequel ledit arbre secondaire (300) est approprié pour être fonctionnellement relié au système d'entraînement pour transmettre le mouvement rotatif à l'arbre d'entrée (100).

12. Mélangeur agricole autopropulsé (500) selon l'une quelconque des revendications 1 à 11.

13. remorque de mélangeur agricole (501) selon l'une quelconque des revendications 1 à 11.
